# EUROPEAN PATENT SPECIFICATION

(11) **EP 2 037 726 B1**
(45) Date of publication and mention of the grant of the patent: **29.12.2010**
(21) Application number: 06796221.7
(22) Date of filing: 19.07.2006
(51) Int. Cl.: A01D 46/26

(54) **TOOL WITH IMPROVED SECTION OF SHAPE FOR THE AUTOMATIC HARVEST OF OLIVES**
WERKZEUG MIT VERBESSERTEM FORMPROFIL ZUR AUTOMATISCHEN ERNTE VON OLIVEN
OUTIL A COUPE TRANSVERSALE AMÉLIORÉE POUR LA CUEILLETTE AUTOMATIQUE DES OLIVES

(30) Priority: 07.07.2006 IT PI20060082
(43) Date of publication of application: 25.03.2009
(73) Proprietor: Mipe Viviani Srl, 53035 Monteriggioni (SI) (IT)
(72) Inventor: PETRENI, Luciano, 53035 Monteriggioni (Sl) (IT)
(74) Representative: Turini, Laura
(86) International application number: PCT/IT2006/000547
(87) International publication number: WO 2008/004259

(56) References cited:
- EP-A1- 1 040 747
- EP-A1- 1 520 463
- US-A- 3 727 387

## Description

### Technical Field

The present invention concerns the technical sector relative to the production of agricultural machines and, specifically, to the type of machineries for the harvest of olives.

In particular, this invention concerns the technical sector relative to the production of accessories or tools for oscillating, wheel machines for the harvest of olives and more precisely the technical sector relative to the production of tools called "teeth" to be applied to oscillating wheels.

### Background Art

Nowadays, the harvest of olives, despite its considerable importance from an economic point of view, is traditionally and mainly carried out entirely manually, while its mechanization and automation is not so developed as the one relating to the harvest of other kinds of fruits or goods in general.

One of the main causes that have in practice prevented the technological development of this sector, at least as regards quantity, is the difficulty to handle bulky and complicated machineries, even if effective. These machineries, often combined, i.e. designed for the threshing/transport and storing of the product, are indeed suitable for even, large and clean grounds, with quite distant rows permitting the automatic harvest. In addition, this working dynamic requires a particular care of the plant, above all regarding the type of pruning that is specific in case of automatic harvest.

These conditions cannot be found in many zones where the olive groves are indeed located on "terraced" hills or however in narrow or steep places, where the olives are pruned in a wise traditional way, perfect for the advantageous use of the productive capacity of the plant, but awkward in case of automatic harvest.

In addition, in these zones, the olive has always carried out not only the function of productive plant, but even the function of stabilizing the ground and in some cases of wood plant. It's also necessary to consider the landscape aspect, as the olive has always been an integral part of the Mediterranean area: this aspect often constitutes an important and inevitable obligation, regardless of the wish or possibility to change the basic aspect of the olive grove according to a more modern and productive technological management.

"Least but not last", there are some kinds of olive plants, for example the "Moraiolo", widespread in some zones of production, having typical small and light olives, with very resistant stalks (until 1.3 Kg/traction resistance force), on fragile and thin branches. It's obviously not possible to work in such a landscape with high-productive machines, both because of their sizes incompatible with the arrangement of the plants and the adjacent spaces, and because of the damage they might cause to the same plant, especially if old.

Therefore, in the above cited large traditional areas, the realization of integrated harvest yards (combined machines harvester/transporter or interceptor) is not possible, whereas it's instead possible in other areas with even ground, suitable for groves with "six" spaces between rows, for the employment of high-productive combined automatic machines.

In recent years, cultivators have tried to speed up the production by means of threshing machines, combined with independent crawler interceptors, but they have caused considerable damages to the plants, involving drops of their productivity in the following years and slowness in the operations of placing and change of plant, which do not make the procedure advantageous.

In addition, it's important to observe that together with the big producers, who however may invest in vehicles and devices getting even a bit greater effectiveness than the traditional harvest, but advantageous on the basis of proportion to the wideness of the ground, there are many middle-small producers who necessarily need efficient and durable means, simple and rapid to use and maintain, but above all flexible, so as to suit mechanical systems already present in the firm, like the mechanical or hydraulic outputs of the tractors and/or other different operating mechanical vehicles.

Because of this group of producers of olives and oil, which is considerable, the technological market has developed, simultaneously with machines designed to make the complete cycle of the harvest as more as possible automated, whenever possible, a parallel sector developing harvest machines that can suit other existing mechanical systems and capable of:
- separating the olive from the stalk, by means of dynamic stress of various kind;
- working on bumpy grounds;
- easily reaching the various parts of the hair of the plant;
- ensuring a drop of the olives by random throw;
- limiting to the maximum the damage due to the mechanical impact of the device on the plant.

Therefore nowadays, in this specific sector with the above-mentioned characteristics and problems, we are still far from such a technological maturity to promote a wide spread of devices that result clearly advantageous on the basis of the effectiveness-cost ratio. In particular, there are no systems that permit the drop of the olives within the vertical axis of the hair of the plant, in order to be able to integrate the system with interceptors and mechanical transporters of suitable sizes and, at the same time, to avoid any damage to the plants during the harvest.

The machinery that at present is closer to the solution of said problems is a specific final support, called oscillating wheel. The wheel is made of a shaft connected to devices giving to it the desired movements (axial, angular, alternative or other kind), where a definite number of tools, called "teeth", are fitted. They are constituted by a central body with a hole, generally having polygonal or circular shape with key, so as to be suited to the shaft that is made from a metal draft having polygonal or circular section.

From the central hub, two teeth symmetrically extend; in series with the other similar components, they will have the task to separate the fruit from the stalk (vegetable connection branch/fruit), working as a sort of comb on the leaves full of fruits.

Thus, the tooth is the active component of the machinery, which means the object that works directly on the leaves of the plants, detaching their fruits.

At present, this tool or tooth is made by a central hub with hole of suitable shape for its fitting on the drive shaft (obviously having section corresponding to the one of the hole), and by two ray arms having half-conical shape tapering outwards.

Between the arms and the shaft, the connection area is limited, so that it hardly resists and is compatible with the manufacturing of the same element, which can be obtained by pressure injection of plastic material.

The ends of the arms have hemispherical connections.

The half-conical shape of the arms of each tooth inevitably implies the circular shape defined by their transversal section, with reducing diameter as the ends approach, until they properly finish with a small semi-spherical connection.

The specific analysis of the stress exerted on the single arm and of its resistance and response to the applied forces - both specific forces in the applied dynamic and fixed forces in condition of working loads - depends on the material used for the item at issue (arm) and on its shape (section). Therefore, the arm of the tooth, reduced to simple mechanical computation of beam "fitted at one end", as well as rule of computation of any dimension or control plan, must be analysed for "bending" stress, like actually the beam (or arm of the tooth) works.

As known, the rigidity of a beam is a function of the shape (moment of inertia) and of the material (modulus of resistance).

In practice, it's the shape of the section of the tool's arms that defines the effectiveness and efficiency of the same tool.

Having restricted the field of the functions that may significantly vary the efficiency of the single tooth, almost always depending on its sizes, we'll now describe the mechanical responses the current geometrical shape gives in the working dynamics.

The circular section, proper of the half-conical shape of the current "teeth", gives the component characteristics of isotropic rigidity, which means not dependent on the direction of the bending plane where the load acts. Evidently, in the axial direction along the leaf of branch to "wipe", the tooth finds an obstacle, therefore a certain stress, compared with the operation of positioning and approaching to the working start phase, in which case the tooth is certainly oversized, having no physical contrast.

Therefore, the current geometrical shape does not guarantee an improvement of the component as regards the characteristics of rigidity and inertia in relation to the working proportions.

Thus, the apparent balance given by the half-conical shape (circular section) of the tooth, in the working dynamic results its exact opposite, preventing to meet the current need of high values of rigidity on the working plane (perpendicular to the axis of the shaft or wheel) and the complementary need of low values of rigidity in the positioning or approaching plane (perpendicular to the previous plane).

A tool according to the preamble of claim 1 is disclosed by EP-A- 1040747.

### Disclosure of invention

The present invention aims at avoiding the above-mentioned and other drawbacks, by manufacturing of a tooth that can be applied on the final device of the above cited specific machines, having similar hole for its fitting, but such a shape of the arms as to obtain different values of rigidity in the two planes of dynamic activity, i.e. the real working plane (plane of the movement of combing the leaf to detach the fruit) and the relative perpendicular plane, i.e. the one of the movement necessary for the positioning.

In the first case, the tooth needs a high rigidity, because when it works on the fruit it requires a certain mechanical response, especially in the specific case of particular plants having very resistant stalks (up to 1300grf per fruit); on the contrary, for the free movement of positioning, a high rigidity would be excessive and therefore counter-productive, since in this case the tooth needs low values of rigidity.

The advantages resulting from the present invention essentially consist of the fact that it's possible to have different values of rigidity in the working plane (A) and in the positioning plane (B); that the high rigidity obtained in the working plane (A) permits the separation of the fruit from the branch without particular mechanical strains on the wheel (6), even in the case of types of fruits having a very resistant stalk (up to 1300grf); that the high rigidity in the working plane (A) allows the arm (5) of the tooth (1) to keep its position during the approach, avoiding an excessive bending that, mechanically loading the material, makes the fruit overturn after separation, throwing it too far from the operative area; that this invention permits the drop of the fruit within the ray of the hair of the plant, so enabling the combined use of devices of interception of the gathered product with a combined and convenient harvest system; that the high rigidity of the arm (5) of the tooth (1) on the working plane (A) permits to work with a production speed about 40% greater that the one used today, without risks of breaking or malfunction of the final devices; that the low rigidity of the arm (5) of the tooth (1) on the positioning plane (B), perpendicular to the working plane, avoids any risk of breaking of the same devices in contact with the tree, making them elastically follow the leaves of the hair; that the low rigidity of the arms (5) of the tooth (1) on the positioning plane (B) considerably reduces the damages on the plant generally provided by the mechanical operations, thanks to the extreme flexibility of the teeth in this direction that follow the various bulks without scratching or even breaking branches and leaves; that this flexibility, in combination with the above-mentioned perpendicular rigidity, fixes almost half the speed of approaching of the machine, with the consequent economic profits it entails; that the use of this device can be perfectly integrated in all the existing specific machineries, permitting all the described advantages by the simple replacement of new conception teeth (1).

Reduced to its essential structure and with reference to the figures of the enclosed drawings, a tool, or tooth (1), for oscillating wheel machines for the harvest of olives, having a central part suitable shaped to fit on a shaft (6), according to the present invention, comprises at least one, preferably every arm (5) having a shape of the section with different moment of inertia in function of the barycentre axis.

The cited tool is preferably made by two opposite arms (5) placed on the same axis of the hub (3), integral part of the same tool, by means of opposite connection sectors (4) designed to work in direct contact with the fruit, both having section with different moment of inertia in function of the barycentre axis.

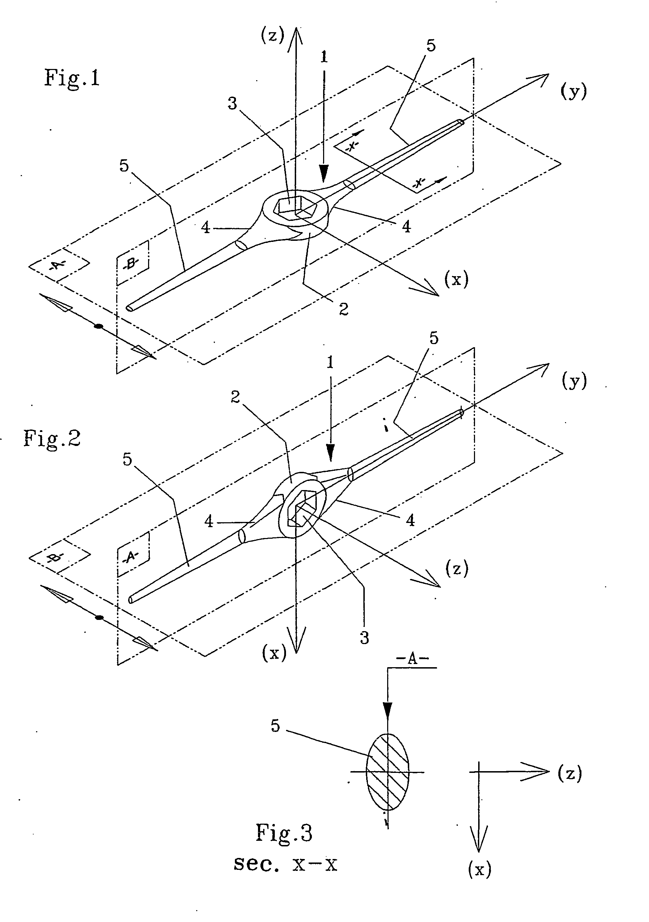

Said tool **characterized in that** it comprises:
- means to increase the rigidity of the arms (5) in contact with the fruit when detaching it for the harvest, constituted by the particular section of the arm (5), shaped as to have different moment of inertia in function of the barycentre axis (sec. x-x, Fig. 3), having longer axis according to the direction (x) of the working motion, so as to firmly detach the fruit without dynamically charging it of kinetic energy given by the excessive bending of the tooth before the detachment, regardless of the resistance of the stalk;
- means to reduce the rigidity of the arms (5) on the plane (B) (z-y), perpendicular to the working plane, constituted by the same particular section having shorter axis useful in case of possible accidental contacts with trunk, branches and leaves of the plant, so as to bend during contact without causing damages.

The greater size of the section is directed towards the working plane, so increasing the rigidity, whereas in the perpendicular plane of the free movement of positioning and approaching, the smaller size permits a considerable reduction of rigidity, so that the teeth better follow the leaves, thus reducing the damages to the plant.

The sizes of the section, as well as their proportion, will be improved during the design phase of the tooth, as they are directly responsible of the rigidity of the arm; for example, in the case of particular types of plant having a very resistant stalk, the larger side of the section (with axis in direction of the harvest motion) will be greater than the one of a plant having fruits easy to detach.

So varying these proportions, it's possible to supply the ideal tooth for different types of plants, regardless of the dimensions on the ray of action, thanks indeed to the proportion of the sizes tapering along the entire arm. Always working on these dimensions, it's possible to vary in positive or negative the minor size of the section, so getting more or less capacity of rigidity of the tooth, above all necessary for young, delicate and fragile plants or branches. Therefore, this invention can be manufactured in several versions, which can be anyway used on the same farm machineries, but capable of being suited to the various types of plant, distinguishing indeed the bending resistance of the tooth independently, both in working and positioning direction.

In a practical solution, this invention takes the shape with elliptical section.

Said tool wherein the section of the arms (5) reduces its ray as the connection (4) with the hub (3) diminishes, until the final connection (7), giving the tooth more and more flexibility towards outside, advantageous in practice, but keeping constant the proportion of the bending moment compared with the two planes, (A) of working and (B) of positioning. This tapering, starting from the final point of the connection (4), where firstly we get the typical shape of the section, proceeds with same proportion larger/smaller side reducing towards the outside of the arm; which allows the single arm of the tooth, as its end approaches, to be more and more flexible, so as to gradually bend simultaneously with the dynamic of combing of the device and above all when, in the last phase releasing the leaf, it works on the final portion of the leaf, naturally more fragile and easy to break, and bends following the various secondary leaves so leaving the branch intact.

Said tool wherein the arms (5) are connected at their ends by same moulding, eliminating complementary surfaces creating corners that might damage the plant, after forced contact.

As a matter of fact, the final portion however works on the plant in the various dynamics, both during working and positioning; regardless of the ability of the worker to handle the wheel, it's inevitable that the points of the arms come into contact with trunk, branches, secondary branches and leaves. This contact, thanks to the particular round points obtained by the cited connection, avoids any scratch and cut on the plant, thanks indeed to the absence of sharp corners in this shape and the relevant elasticity and flexibility of the specific final tampering sector, regardless of the working plane.

The high rigidity of the arms (5) of the tooth (1) on to the working plane (A) also permits to obtain almost vertical drops of the olives, anyway included within the ray of the hair. This dynamic avoids the throw of the fruit that occurs when an excessive elasticity of the tooth causes such a strain that it gathers return mechanical energy given by its bending, which is later released on the fruit after the separation of the stalk from the branch. This drawback is significant, since it doesn't permit the combined use of automatic devices of interception and harvest that require restricted drops of the olives, normally few metres. On the contrary, as the.tooth is perfectly rigid in the working dynamic, the detachment of the fruit occurs without or just with a minimal bending charge, thus completely avoiding the above-mentioned overturn effect and ensuring such a drop ray that it permits the interaction with other automatic harvest devices.

Another relevant advantage of this invention, however dependent on the basic concept of differentiation of the rigidity on the two planes, is the high flexibility of the arms of the teeth during positioning (movement on the plane -B-): as a matter of fact, in this case, the low rigidity allows the arms of the tooth to elastically suit the leaves of the hair, with the double advantage not to break in the case of excessive contacts with the branches, but to bend sufficiently, anyway beyond the current limit, in addition, this suiting capacity involves the considerable reduction of damages (scratches or breaks of branches) that however cause to the plant healthy problems, which will later result in negative productivity.

Said tool that is made of polypropylene, suitable to the technological process of moulding, particularly economical for a mass production, which is preferable for this invention on the basis of the quantity of teeth provided on every single device.

This material, however, can be also replaced with polymeric materials having more limited mechanical results (therefore less expensive), but however maintaining its characteristics; as a matter of fact, a suitable dimensioning of the section and of the tampering degree towards the outside can perfectly counterbalance the minor mechanical capacity of the same material, since the elasticity of the beam, as above stated and as known by every technician, is a function of the material (modulus of elasticity) and of its shape (moment of inertia).

Said tool that is made of polypropylene, material suitable to the productive technological process (moulding).

Said tool that is made by moulding.

Conveniently, this material can be replaced with plastic materials having minor mechanical features, which can be however counterbalanced by different dimensioning (in positive and/or negative) of the section and of the tampering degree of the arm of the tooth, so getting the same characteristics of elasticity as a manufacturing with ideal material.

Said tool constituted by means for its fitting on the shaft or wheel (6), consisting of a central hub (3), of circular shape and specific thickness defining the distance between the various teeth (1) forming the comb, having a central hole, of any shape, e.g. polygonal or circular, compatible in size with the shaft (6) transmitting directly the movement.

Said tool comprising means that permit the connection (4) between central hub (3) and opposite side arms (5) with typical section, obtained by same moulding.

This shape is obviously useful, because when the series of teeth has been axially closed, the turning moment or couple, provided by the rotation of the teeth round the longitudinal axis of the wheel, is effectively transmitted, thanks indeed to this type of coupling, which in fact prevents relative rotational movements between shaft and tooth. However, this coupling, providing the same mechanical response, can be realized by different methods existing on the market, such as the use of an axis with circular section with the insertion of one or more keys, the use of a grooved axis, mechanical screws, pneumatic means or any other device for this purpose.

Obviously, the hole on the hub of the tooth will have suitable shape for every manufacturing method above described, anyway easy to realize by means of the same system (moulding by pressure casting) used for the teeth, object of the present invention.

Said tool used in a machine for separating the olive from the stalk, comprising at least:
- at least one final device consisting of a number of teeth (1), fitted in series on a shaft (6), so forming a sort of comb having different angular positions, designed to enter the first part of the leaf full of fruits;
- at least one shaft (6), and relative central hub (3) on the tooth, having hole with the same shape as the one of the shaft, transmitting the couple (R) to the teeth (1) by the axial rotation of the wheel (6), in order to connect the teeth (1) to the shaft or wheel (6);
- an actuator for transmitting to the shaft (6) the mechanical movement, like mechanical uses, for example hydraulic outputs supplying motion to the tractors, or electrical, pneumatic or motor supplies, provided by specific existing machineries, by means of suitable interface tools however not affecting the dynamic of this device.

In practice, the manufacturing details may however vary as regards shape, size, position of elements and type of materials used, but still remain within the range of the idea proposed as a solution and consequently within the limits of the protection granted by this patent for invention.

### Brief description of drawings

The advantages of the present invention will be better understood by every expert in this field by referring to the enclosed drawings, given as practical examples of the invention but not to be considered restrictive.
- Fig. 1 shows a perspective view of the tooth directed on the working plane (A), whereas Fig. 2 shows the same tooth directed on the positioning plane (B) perpendicular to the previous one. The tooth (1), realized by moulding in appropriate plastic material having sufficient elasticity for this specific purpose, is made of a central body (2), having a thickness defining the right distance between the teeth that are assembled in series on the oscillating shaft. This shaft is made of metal material and has hexagonal shape, so as to perfectly fit the corresponding hexagonal hole (3) made at the centre of the body (2). The hexagonal shape of the shaft and of the hole is only an example, in fact other shapes, like circular, are not excluded, but still corresponding each other so as to permit their reciprocal fitting. From the central body (2), through suitable connections (4) that consider the normal mechanical and technological principles meeting the resistance criteria and the applicability of the moulding, two opposite arms (5) extend, tapering their section outwards.
- The direction of the section, depicted in Fig. 3 relative to the section X-X of the arms indicated in Fig. 1, according to both the Figs. 1 and 2, will have greater semi-axis on the working plane (A), in order to ensure on this plane more rigidity than the one on the positioning plane (B), perpendicular to the previous one and comprising the minor semi-axis of the section of the tooth. Which is valid, evidently, for the entire length of the arms (5), as they are proportionally tapered. With reference to this figure, the direction of the load (x direction) is the one indicated that acts according to the grater inertia of the section, whereas the direction of the positioning motion (z direction) is the one relative to the moment of inertia minor than the same section.

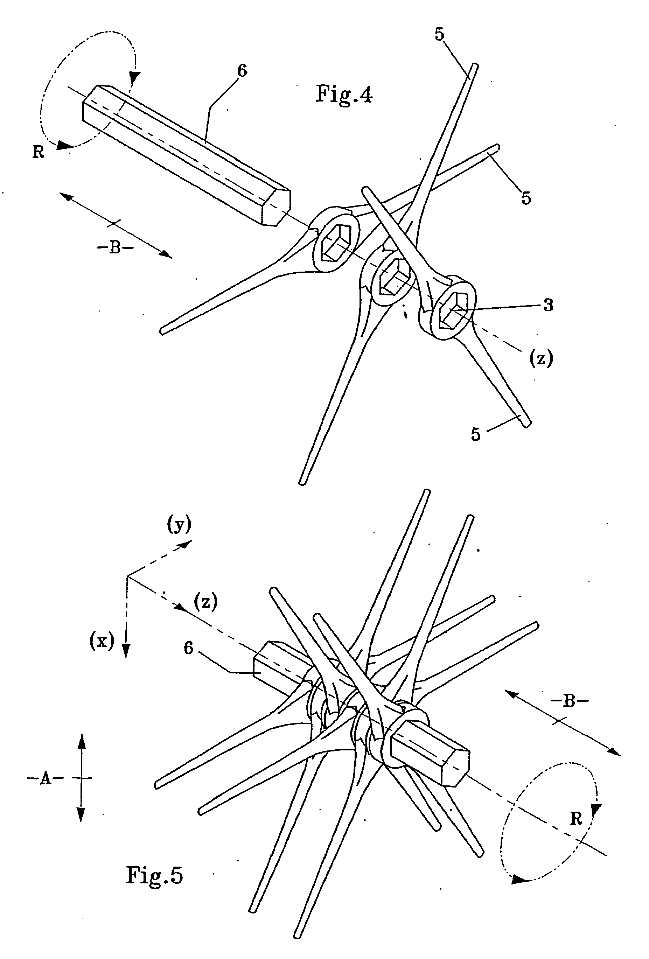

- Fig. 4 shows the shaft (4) where the teeth (1) are fitted. Its hexagonal shape permits, thanks to the appropriate hole (3) of equivalent shape, to transmit exactly the rotational movement around the axis z (R) on all the teeth fitted on it, while the axial movement (indicated by letter z) is guaranteed homogeneously for all the teeth by every known system that fixes the same teeth (1) in axial direction on the shaft (6).
- Fig. 5 shows the resulting comb, wherein the thickness of the tooth and/or possible interposed supports ensure such a distance that permits to shake the leave full of fruits in order to make them fall by beat or vibration exerted on the plane (A), regardless of its more or less traction resistance. The teeth are fitted alternatively with variable angle.

## Claims

1. Tool or tooth for oscillating wheel machines for the harvest of olives, having a central part (2) suitable shaped to fit on the shaft (6) of a wheel, at least one, preferably every arm (5) having a section with different moment of inertia in function of the barycentre axis, **characterized in that** the arm (5) tapers its section from the central part (2) onwards keeping constant the proportion between the bending moment on the working plane (A) and the positioning plane (B) with the rigidity of the arm (5) on the working plane (A) being more than the rigidity of the arm (5) on the positioning plane (B), wherein the working plane (A) is a plane perpendicular to the axis of the shaft (6) and the positioning plane (B) is a plane perpendicular to the working plane (A).

2. Tool according to claim 1, **characterized in that** it is made by two arms (5) placed on the same axis and opposite with reference to the central part (2), both having section with different moment of inertia in function of the barycentre axis.

3. Tool according to claim 1 or 2, wherein the section of the arm(s) has at least two axes (x, z) of different lengths.

4. Tool as claimed in one or more of claims from 1 to 3, **characterized in that** it comprises:
- means to increase the rigidity of the arms (5) in contact with the fruit when detaching it for the harvest, constituted by the particular section of the arm (5), having longer axis according to the direction (x) of the working motion;
- means to reduce the rigidity of the arms (5) on the positioning plane (B) (z-y), perpendicular to the working plane (A), constituted by the same particular section having shorter axis (z) useful in case of possible accidental contacts with trunk, branches and leaves of the plant, so as to bend during contact without causing damages.

5. Tool as claimed in one or more of claims from 1 to 4, **characterized in that** the typical section of the arms (5) reduces its ray as the connection (4) with the hub (3) diminishes, until the final connection.

6. Tool as claimed in one or more of claims from 1 to 5, **characterized in that** the arms (5) are connected at their ends by same moulding as the tool.

7. Tool as claimed in one or more of claims from 1 to 6, **characterized in that** it is made of polypropylene or other plastic or polymeric material.

8. Tool as claimed in one or more of claims from 1 to 7, **characterized in that** it is made by moulding.

9. Tool as claimed in one or more of claims from 1 to 8, **characterized in that** it comprises a central hub (3) having a central hole compatible in size and shape with the shaft (6) transmitting directly the movement.

10. Tool as claimed in one or more of claims from 1 to 9, **characterized in that** it comprises means that permit the connection (4) between central hub (3) and opposite side arms (5) with typical section.

11. Tool as claimed in one or more of claims from 1 to 101, **characterized in that** said connection (4) is realized by moulding and generally has a V-shape, so as to connect on the one hand with the larger side of the hub and on the other hand with the minor side of the arm (5).

12. Comb **characterized in that** it comprises one or more tools according to claims from 1 to 11.

13. Comb as claimed in claim 12, **characterized in that** the single tools or teeth (1) have different angular positions.

14. Machine to separate the olive from the stalk constituted by at least one actuator for transmitting to a shaft (6) the mechanical movement to a final device, or comb, **characterized in that** said final device or comb consists of one or more tools or teeth (1), fitted in series on said shaft (6) according to claims from 1 to 13.

## Patentansprüche

1. Instrument oder Zinken für schwingende Radmaschinen zum Ernten von Oliven mit einem mittleren Teil (2), dessen Form genau auf die Welle (6) eines Rades passt, wobei mindestens eine, vorzugsweise jede Halterung (5) jeweils über einen Abschnitt mit unterschiedlichen Trägheitsmomenten in Abhängigkeit der Schwerpunktachse verfügt, die **dadurch gekennzeichnet ist, dass** die Halterung (5) in in ihrem Abschnitt von dem mittleren Teil (2) ab aufwärts spitz zuläuft, wodurch das Verhältnis zwischen dem Biegemoment auf der Arbeitsebene (A) und der Aufstellebene (B) konstant bleibt, wobei die Stabilität von Halterung (5) auf der Arbeitsebene (A) größer als die Stabilität der Halterung (5) auf der Aufstellebene (B) ist und wobei die Arbeitsebene (A) eine zu der Wellenachse (6) senkrechte Ebene ist und die Aufstellebene (B) eine zur Arbeitsebene (A) senkrechte Ebene ist.

2. Instrument nach Anspruch 1, **dadurch gekennzeichnet, dass** es aus zwei Halterungen (5) besteht, die auf der selben Achse montiert sind und gegenüber dem mittleren Teil (2) liegen, wobei beide über einen Abschnitt mit unterschiedlichen Trägheitsmomenten in Abhängigkeit von der Schwerpunktachse verfügen.

3. Instrument nach Anspruch 1 oder 2, bei welchem der Abschnitt der Halterung(en) über mindestens zwei Achsen (x,z) verfügt, die unterschiedlich lang sind.

4. Instrument nach einem oder mehreren Ansprüchen von 1 bis 3, **dadurch gekennzeichnet, dass** es folgende Bestandteile enthält:
- Vorrichtungen zur Erhöhung der Stabilität der Halterungen (5), sobald sie mit der zu erntenden Frucht in Kontakt kommen, welche aus einem speziellen Abschnitt von Halterung (5) bestehen, der über eine längere Achse in Übereinstimmung mit der Richtung (x) der Arbeitsbewegung verfügt;
- Vorrichtungen zur Verringerung der Stabilität der Halterungen (5) auf der Aufstellebene (B) (z-y), die senkrecht zur Arbeitsebene (A) ist, welche aus dem gleichen speziellen Abschnitt mit einer kürzeren Achse (z) besteht, was bei einem möglichen unbeabsichtigten Kontakt mit Stamm, Ästen oder Blättern einer Pflanze nützlich ist, da bei einem Kontakt eine Biegung erzeugt wird, ohne dass dabei ein Schaden entsteht.

5. Instrument nach einem oder mehreren Ansprüchen von 1 bis 4, **dadurch gekennzeichnet, dass** der typische Abschnitt der Halterungen (5) seinen Radius verringert, da die Verbindung (4) mit der Nabe (3) bis zur endgültigen Verbindung geringer wird.

6. Instrument nach einem oder mehreren Ansprüchen von 1 bis 5, **dadurch gekennzeichnet, dass** die Halterungen (5) an ihren Enden von demselben Formteil wie dem des Instruments verbunden sind.

7. Instrument nach einem oder mehreren Ansprüchen von 1 bis 6, **dadurch gekennzeichnet, dass** es aus Polypropylen oder einem anderen Kunststoff oder polymeren Material besteht.

8. Instrument nach einem oder mehreren Ansprüchen von 1 bis 7, **dadurch gekennzeichnet, dass** es im Pressverfahren hergestellt wurde.

9. Instrument nach einem oder mehreren Ansprüchen von 1 bis 8, **dadurch gekennzeichnet, dass** es eine mittige Nabe (3) enthält, welche über eine zentrale Öffnung verfügt, die in Größe und Form zu der Welle passt, welche die Bewegung direkt überträgt.

10. Instrument nach einem oder mehreren Ansprüchen von 1 bis 9, **dadurch gekennzeichnet, dass** es über Vorrichtungen verfügt, die eine Verbindung (4) der mittigen Nabe (3) mit den gegenüberliegenden Seitenhalterungen (5) mit dem typischen Abschnitt ermöglicht.

11. Instrument nach einem oder mehreren Ansprüchen von 1 bis 101, **dadurch gekennzeichnet, dass** die besagte Verbindung (4) im Pressverfahren hergestellt wurde und im Allgemeinen V-förmig ist, damit eine Verbindung mit der längeren Nabenseite einerseits und andererseits mit der kürzeren Seite der Halterung (5)ermöglicht wird.

12. Kamm, der **dadurch gekennzeichnet ist, dass** er ein oder mehrere Instrumente nach den Ansprüchen von 1 bis 11 beinhaltet.

13. Kamm nach Anspruch 12, **dadurch gekennzeichnet, dass** die einzelnen Instrumente oder Zinken (1) über unterschiedlich winklige Positionen verfügen.

14. Maschine zum Ablösen der Olive vom Stängel, die aus mindestens einem Stellantrieb besteht, und zwar zur Übertragung der mechanischen Bewegung über eine Welle (6) zu einem Endgerät oder Kamm, **dadurch gekennzeichnet, dass** das besagte Endgerät oder Kamm aus einem oder mehreren Instrumenten oder Zinken (1) besteht, die nach den Ansprüchen 1 bis 13 auf der besagten Welle (6) in Serie montiert sind.

## Revendications

1. L'outil ou dent pour les machines à roue oscillante pour la récolte des olives est doté d'une partie centrale (2) à la forme spécialement adaptée pour être insérée sur l'arbre (6) d'une roue, avec au moins un bras (5) ou de préférence chaque bras (5) ayant une section avec un moment d'inertie différent en fonction de l'axe du barycentre. Il est **caractérisé par le fait que** chaque bras (5) part en pointe à partir de la partie centrale (2) vers l'avant en conservant la même proportion entre le moment du pliage sur le plan de travail (A) et le plan de positionnement (B) avec la rigidité du bras (5) sur le plan de travail (A) supérieure à la rigidité du bras (5) sur le plan de positionnement (B), et où le plan de travail (A) est un plan perpendiculaire à l'axe de l'arbre (6) et le plan de positionnement (B) est un plan perpendiculaire au plan de travail (A).

2. L'outil, tel que mentionné dans la revendication 1, est **caractérisé par le fait qu'**il est composé de deux bras (5) placés sur le même axe et à l'opposé pour ce qui est de la partie centrale (2); ces deux bras ont une section avec un moment d'inertie différent en fonction de l'axe du barycentre.

3. L'outil, tel que mentionné dans la revendication 1 ou 2, a la section du (des) bras avec au moins deux axes (x, z) de longueurs différentes.

4. L'outil, tel que mentionné dans une ou plusieurs des revendications ci-avant allant de 1 à 3, est **caractérisé par le fait qu'**il comprend :
- des systèmes permettant d'augmenter la rigidité des bras (5) au contact du fruit lorsqu'ils le détachent pour la récolte; ces systèmes sont constitués par une section particulière de bras (5), ayant un axe plus long en fonction de la direction (x) du mouvement de travail ;
- des systèmes permettant de diminuer les bras (5) sur le plan de positionnement (B) (z-y), perpendiculaire au plan de travail (A); ils sont constitués de la même section particulière ayant un axe plus court (z) se révélant utile en cas de contact accidentel avec des troncs, branches ou feuilles de la plante, de sorte que l'outil peut se plier lors dudit t contact afin d'éviter de provoquer des dommages.

5. L'outil, tel que mentionné dans une ou plusieurs des revendications ci-avant allant de 1 à 4, est **caractérisé par le fait que** la section typique des bras (5) diminue son rayon dès que le raccordement (4) avec le moyeu (3) diminue, et ce, jusqu'au raccordement final.

6. L'outil, tel que mentionné dans une ou plusieurs des revendications ci-avant allant de 1 à 5, est **caractérisé par le fait que** les bras (5) sont raccordés à leur extrémité par le même type de moulage que celui de l'outil.

7. L'outil, tel que mentionné dans une ou plusieurs des revendications ci-avant allant de 1 à 6, est **caractérisé par le fait qu'**il est fait en polypropylène ou autre matériau plastique ou polymère.

8. L'outil, tel que mentionné dans une ou plusieurs des revendications ci-avant allant de 1 à 7, est **caractérisé par le fait qu'**il est fabriqué par moulage.

9. L'outil, tel que mentionné dans une ou plusieurs des revendications ci-avant allant de 1 à 8, est **caractérisé par le fait qu'**il comprend un moyeu central (3) doté d'un orifice adapté, en termes de taille et de forme, à l'arbre (6) transmettant directement le mouvement.

10. L'outil, tel que mentionné dans une ou plusieurs des revendications ci-avant allant de 1 à 9, est **caractérisé par le fait qu'**il comprend des systèmes permettant le raccordement (4) entre le moyeu central (3) et les bras latéraux opposés (5) ayant une section caractéristique.

11. L'outil, tel que mentionné dans une ou plusieurs des revendications ci-avant allant de 1 à 11, est **caractérisé par le fait que** ledit raccordement (4) est réalisé par moulage et, en général, a une forme en V, de sorte qu'il puisse être raccordé, d'une part, au côté le plus large du moyeu et, d'autre part, au côté le plus petit du bras (5).

12. Le peigne est **caractérisé par le fait qu'**il comprend un ou plusieurs outils tel que mentionné dans les revendications allant de 1 à 11.

13. Le peigne, tel que mentionné dans la revendication 12, est **caractérisé par le fait que** chaque outil ou dent (1) a une position angulaire différente.

14. La machine à détacher les olives de leur tige est constituée par, au moins, un actionneur pour la transmission à l'arbre (6) du mouvement mécanique à l'appareil final, ou peigne, et est **caractérisée par le fait que** ledit appareil final ou peigne consiste en un ou plusieurs outils ou dents (1), montés en série sur ledit arbre (6) tel que mentionné dans les revendications allant de 1 à 13.
